# EUROPEAN PATENT APPLICATION

(11) **EP 4 822 658 A1**
(43) Date of publication of application: **14.10.2026**
(21) Application number: 23962668.2
(22) Date of filing: 28.12.2023
(51) Int. Cl.: G06V 20/58, G06V 10/25, G06V 10/26, G06V 20/56, G06V 20/64, G06V 10/80

(54) **OBJECT INSTANTIATION METHOD AND APPARATUS**

(71) Applicant: Yinwang Intelligent Technologies Co., Ltd., Shenzhen, Guangdong 518110 (CN)
(72) Inventor: YANG, Jie, Shenzhen, Guangdong 518110 (CN); SU, Peng, Shenzhen, Guangdong 518110 (CN); LIN, Qinzhuang, Shenzhen, Guangdong 518110 (CN)
(74) Representative: Maiwald GmbH
(86) International application number: PCT/CN2023/142649
(87) International publication number: WO 2025/137987

(57) **Abstract**

An object instantiation method and apparatus are provided. Multi-sensor information is input into an obstacle detection model, to obtain data of a first central point and/or grid data, where the data of the first central point includes central location information of a first object, and the grid data includes an attribute of each grid; and a first polygon instance of the first object is obtained based on the data of the first central point and/or the grid data. In this way, contour information of the first object is obtained based on the first central point and/or the grid data output by the obstacle detection model. The object instantiation method is a general instantiation method applicable to different types of objects or obstacles, avoids iterative calculation of a general clustering algorithm, has a small calculation amount, a low requirement on computing power of a device, and high calculation efficiency, and therefore can be easily deployed on a vehicle.

## Description

### TECHNICAL FIELD

This application relates to the field of intelligent vehicles, and in particular, to an object instantiation method and apparatus.

### BACKGROUND

Because the intelligent driving technology does not require people to drive a vehicle, driving errors caused by people can be effectively avoided in theory, traffic accidents can be reduced, and transportation efficiency of highways can be improved. Therefore, the intelligent driving technology is increasingly valued. With continuous development of the intelligent driving technology, a technology related to intelligent driving has been applied to an increasing quantity of vehicle models, and therefore intelligent driving is gradually applied to all scenarios from specific scenarios. Based on collaboration of computer vision and multi-sensor sensing, the intelligent driving technology can implement intelligent driving without an active manual operation on a vehicle.

Currently, a sensing algorithm mainly includes allowlist-based obstacle detection and lidar (Lidar) point cloud-based clustering obstacle detection. The two detection methods can be used only in specific scenarios. However, in an actual driving process, the vehicle encounters objects of various shapes and types, such as an abnormally-shaped vehicle and an irregular obstacle. In this case, the two detection methods are not generally used.

In addition, a general instantiation result of an object cannot be obtained based on the foregoing detection methods. Therefore, how to improve generalizability of object instantiation is an urgent problem to be resolved.

### SUMMARY

This application provides an object instantiation method and apparatus, to improve generalizability of object instantiation by performing instantiation on different types of objects.

According to a first aspect, an object instantiation method is provided, where the method includes: inputting multi-sensor information into an obstacle detection model, to obtain data of a first central point and/or grid data, where the data of the first central point includes central location information of a first object, and the grid data includes an attribute of each grid; and obtaining a first polygon instance of the first object based on the data of the first central point and/or the grid data.

In the foregoing technical solution, contour information of the first object is obtained based on the data of the first central point and/or the grid data that are/is output by the obstacle detection model. The object instantiation method is a general instantiation method applicable to different types of objects or obstacles, avoids iterative calculation of a general clustering algorithm, has a small calculation amount, a low requirement on computing power of a device, and high calculation efficiency, and therefore is easily deployed on a vehicle.

With reference to the first aspect, in some implementations of the first aspect, the obtaining a first polygon instance of the first object based on the data of the first central point and/or the grid data includes: determining a first grid around a grid in which the first central point is located as the first polygon instance, where occupancy information corresponding to the first grid indicates that the first grid is occupied.

In this way, the data of the central point of the object is directly output by using the obstacle detection model without obtaining the central point through clustering iteration, thereby improving calculation efficiency of object instantiation.

With reference to the first aspect, in some implementations of the first aspect, the method further includes: when the first polygon instance is adhered to a second polygon instance of a second object, determining, based on a first similarity and a second similarity, that a second grid belongs to the first object or the second object, where the second grid is at a location at which the first polygon instance is adhered to the second polygon instance, the first similarity includes a similarity between the second grid and the grid in which the first central point is located, the second similarity includes a similarity between the second grid and a grid in which a second central point is located, and data of the second central point includes central location information of the second object.

In this way, if the first polygon instance is adhered to the second polygon instance, a problem that the first object is adhered to the second object may be resolved by using a multi-dimensional similarity. Especially for a dynamic object, clearly separating boundaries of the dynamic first object and the dynamic second object can help accurate planning and control subsequently.

With reference to the first aspect, in some implementations of the first aspect, the grid data includes a plurality of frames of data of the first object; and the obtaining a first polygon instance of the first object based on the data of the first central point and/or the grid data includes: fusing the plurality of frames of data to obtain the first polygon instance.

In some implementations, the plurality of frames of data are fused, to supplement the first polygon instance, so as to obtain a supplemented first polygon instance.

In this embodiment of this application, by using grid data of different frames for the first object in time domain, both visible and invisible surfaces of the instance of the object can be completely depicted, thereby helping to perform more proper prediction, planning, and control on the first object. For example, for a dynamic object, as a vehicle moves continuously, the plurality of frames of data may supplement grid data of different angles of the dynamic object, to obtain a more complete first polygon instance. For another example, for a static object (for example, a traffic cone), if the vehicle moves continuously while a dynamic object may block between the vehicle and the static object, the plurality of frames of data may further supplement grid data of different angles of the static object, to obtain a more complete first polygon instance.

With reference to the first aspect, in some implementations of the first aspect, the grid data includes a plurality of frames of data; and the obtaining a first polygon instance of the first object based on the data of the first central point and/or the grid data includes: fusing the plurality of frames of data to obtain a plurality of first polygon instances of the first object.

In this way, in a time sequence, by using grid data output through a multi-frame obstacle detection model, noise can be filtered out, and problems such as blocking and a low confidence level (for example, a case in which a distant point cloud is sparse or a visual feature is not obvious) of distant prediction can be effectively overcome.

With reference to the first aspect, in some implementations of the first aspect, the method further includes: clustering the plurality of first polygon instances based on height information in the plurality of frames of data, to obtain different three-dimensional polygon instances.

In this way, the first polygon instances of the plurality of height levels are clustered, so that an objective and realistic environment can be further reproduced, thereby helping further resolve a scenario in which a vehicle is uphill or downhill and a scenario of a suspended obstacle.

With reference to the first aspect, in some implementations of the first aspect, the method further includes: dividing visible surfaces of the different three-dimensional polygon instances to obtain boundaries of a plurality of first objects.

In this way, the three-dimensional polygon instance is divided based on visible surface information in the grid data, so that a boundary of an obstacle can be represented more briefly, thereby further helping improve accuracy of subsequent vehicle planning and control.

With reference to the first aspect, in some implementations of the first aspect, the method further includes: inputting the plurality of frames of data into a ground estimation model, to obtain height information of the plurality of first objects from a road surface; and performing passing area analysis on the different three-dimensional polygon instances based on the height information, to obtain passing risk information corresponding to the plurality of first objects.

In this way, for an object that has a low risk for a vehicle to pass, for example, a suspended obstacle and a height limiting pole in a driving process, a probability of incorrectly triggering autonomous emergency braking (autonomous emergency braking, AEB) can be reduced by evaluating the passing risk information of the first object, thereby improving user experience.

With reference to the first aspect, in some implementations of the first aspect, the method further includes: when the plurality of first objects are spatially continuous, and the plurality of first polygon instances belong to a same line segment, converting the plurality of first polygon instances into a traveling boundary line.

In this way, continuity of continuous first polygon instances is determined, to convert the plurality of first polygon instances belonging to the same line segment into the traveling boundary line. In a complex traffic environment, a drivable boundary of the vehicle can be well determined, and this has a great effect in a scenario in which a traffic reality changes or there is no high-definition map.

According to a second aspect, an object instantiation apparatus is provided, where the apparatus includes a processing unit, and the processing unit is configured to: input multi-sensor information into an obstacle detection model, to obtain data of a first central point and/or grid data, where the data of the first central point includes central location information of a first object, and the grid data includes an attribute of each grid; and obtain a first polygon instance of the first object based on the data of the first central point and/or the grid data.

It should be understood that the second aspect is the apparatus corresponding to the first aspect. For beneficial effects brought by the solution of the second aspect, refer to the first aspect. Details are not described herein again.

With reference to the second aspect, in some implementations of the second aspect, the processing unit is specifically configured to determine a first grid around a grid in which the first central point is located as the first polygon instance, where occupancy information corresponding to the first grid indicates that the first grid is occupied.

With reference to the second aspect, in some implementations of the second aspect, the processing unit is further configured to: when the first polygon instance is adhered to a second polygon instance of a second object, determine, based on a first similarity and a second similarity, that a second grid belongs to the first object or the second object, where the second grid is at a location at which the first polygon instance is adhered to the second polygon instance, the first similarity includes a similarity between the second grid and the grid in which the first central point is located, the second similarity includes a similarity between the second grid and a grid in which a second central point is located, and data of the second central point includes central location information of the second object.

With reference to the second aspect, in some implementations of the second aspect, the grid data includes a plurality of frames of data of the first object; and the processing unit is specifically configured to fuse the plurality of frames of data to obtain the first polygon instance.

In some implementations, the plurality of frames of data are fused, to supplement the first polygon instance, so as to obtain a supplemented first polygon instance.

With reference to the second aspect, in some implementations of the second aspect, the grid data includes a plurality of frames of data; and the processing unit is specifically configured to fuse the plurality of frames of data to obtain a plurality of first polygon instances of the first object.

With reference to the second aspect, in some implementations of the second aspect, the processing unit is further configured to: cluster the plurality of first polygon instances based on height information in the plurality of frames of data, to obtain different three-dimensional polygon instances.

With reference to the second aspect, in some implementations of the second aspect, the processing unit is further configured to divide visible surfaces of the different three-dimensional polygon instances to obtain boundaries of a plurality of first objects.

With reference to the second aspect, in some implementations of the second aspect, the processing unit is further configured to: input the plurality of frames of data into a ground estimation model, to obtain height information of the plurality of first objects from a road surface; and perform passing area analysis on the different three-dimensional polygon instances based on the height information, to obtain passing risk information corresponding to the plurality of first objects.

With reference to the second aspect, in some implementations of the second aspect, when the plurality of first objects are spatially continuous, the processing unit is further configured to: when the plurality of first polygon instances belong to a same line segment, convert the plurality of first polygon instances into a traveling boundary line.

According to a third aspect, an object instantiation apparatus is provided, where the apparatus includes: a memory, configured to store a program; and a processor, configured to execute the computer program code or the instructions stored in the memory. When the computer program code or the instructions stored in the memory are executed, the processor is configured to perform the method provided in any one of the implementations of the first aspect.

According to a fourth aspect, this application provides a processor, configured to perform the method provided in any one of the implementations of the first aspect. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to an interface, and transmits the information through the interface. After the information is output by the processor, other processing may further need to be performed on the information before the information arrives at the interface. Similarly, when the processor receives the input information, the interface obtains/receives the foregoing information, and inputs the information into the processor. Further, after the interface receives the foregoing information, other processing may need to be performed on the information before the information is input into the processor.

Related operations such as transmitting, sending, and obtaining/receiving, unless otherwise specified, or if they do not conflict with actual functions or internal logic in related descriptions, may be understood as operations such as outputting, receiving, and inputting, or may be understood as operations of transmitting, sending, and obtaining/receiving performed by a radio frequency circuit and an antenna. This is not limited in this application.

In an implementation process, the processor may be a processor specially configured to perform these methods, or may be a processor that executes computer program code or instructions in a memory to perform these methods, for example, a general-purpose processor. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a fifth aspect, a computer-readable storage medium is provided, where the computer-readable medium stores program code or instructions that are executed by a device, and the program code or the instructions are used to execute the method provided in any one of the implementations of the first aspect.

According to a sixth aspect, a computer program product including instructions is provided. When the computer program product runs on a computer, the computer is caused to perform the method according to any one of the implementations of the first aspect.

According to a seventh aspect, a chip is provided. The chip includes a processor and a communication interface, and the processor reads, through the communication interface, instructions stored in a memory, to perform the method in any one of the implementations of the first aspect.

Optionally, in an implementation, the chip may further include a memory. The memory stores computer program code or instructions. The processor is configured to execute the computer program code or the instructions stored in the memory. When the computer program code or the instructions are executed, the processor is configured to perform the method provided in any one of the implementations of the first aspect.

According to an eighth aspect, a mobile carrier is provided. The mobile carrier includes any possible apparatus in the second aspect.

In some possible implementations, the mobile carrier is a vehicle.

### BRIEF DESCRIPTION OF DRAWINGS

FIG. 1 is a functional block diagram of a mobile carrier according to an embodiment of this application;
FIG. 2 is a diagram of sensor distribution applied to a mobile carrier according to an embodiment of this application;
FIG. 3 is a diagram of a system architecture according to an embodiment of this application;
FIG. 4 is a diagram of an overall procedure of sensing and detection according to an embodiment of this application;
FIG. 5 is a schematic flowchart of object instantiation according to an embodiment of this application;
FIG. 6 is another schematic flowchart of object instantiation according to an embodiment of this application;
FIG. 7 is a two-dimensional diagram of an effect of object instantiation according to an embodiment of this application;
FIG. 8 is a schematic flowchart of another object instantiation method according to an embodiment of this application;
FIG. 9 is another two-dimensional diagram of an effect of object instantiation according to an embodiment of this application;
FIG. 10 is a diagram of an effect of applying an object instantiation method according to an embodiment of this application;
FIG. 11 is a schematic flowchart of still another object instantiation method according to an embodiment of this application;
FIG. 12 is another diagram of an effect of applying an object instantiation method according to an embodiment of this application;
FIG. 13 is a diagram of an object instantiation apparatus according to an embodiment of this application;
FIG. 14 is a diagram of a structure of an object instantiation apparatus according to an embodiment of this application; and
FIG. 15 is a diagram of a chip system according to an embodiment of this application.

### DESCRIPTION OF EMBODIMENTS

The following describes technical solutions of this application with reference to accompanying drawings.

For ease of understanding embodiments of this application, the following descriptions are provided.

First, in this application, unless otherwise stated or there is a logic conflict, terms and/or descriptions between different embodiments are consistent and may be mutually referenced, and technical features in different embodiments may be combined into a new embodiment based on an internal logical relationship thereof.

Second, in this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" usually indicates an "or" relationship between associated objects. "At least one item (piece) of the following" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be in a singular form or a plural form.

Third, in this application, "first", "second", and various numbers (for example, #1 and #2) are merely used for distinguishing for ease of description and are not intended to limit the scope of embodiments of this application, for example, distinguishing different grid data or the like, rather than describing a particular order or sequence. It should be understood that objects described in such a way are interchangeable in an appropriate circumstance, so that a solution other than embodiments of this application can be described.

Fourth, in this application, descriptions such as "when...", "in a case of...", and "if" all mean that corresponding processing is performed in a specific objective situation, and are not intended to limit time. The descriptions do not mean that a determining action is required during implementation, and do not mean any other limitation. In addition, it does not mean that a determining action after these condition conjunctions is the only condition for implementing the result, and other additional conditions may be included to implement the result.

Fifth, the terms "include", "have" and any other variants thereof in this application are intended to cover non-exclusive inclusion. For example, a process, method, system, product, or device that includes a series of steps or units is not limited to those clearly listed steps or units, but may include other steps or units that are not explicitly listed or are inherent to such a process, method, system, product, or device.

Sixth, in this application, the term "indicate" may include a direct indication and an indirect indication. When a piece of indication information is described as indicating A, the indication information may directly indicate A or indirectly indicate A, but it does not mean that the indication information necessarily carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application.

Seventh, in embodiments of this application, "storage" may mean storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

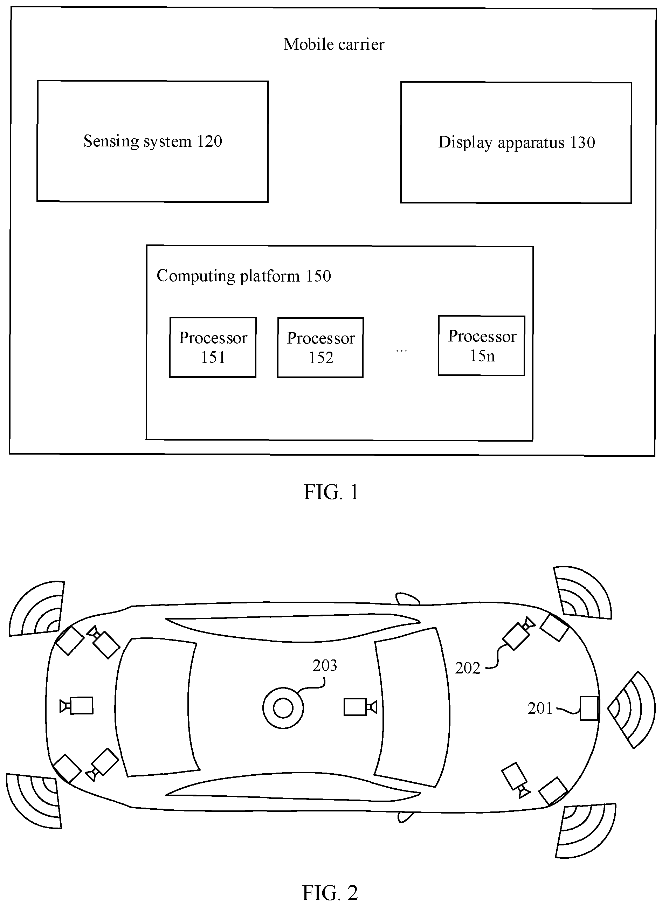

FIG. 1 is a functional block diagram of a mobile carrier according to an embodiment of this application. The mobile carrier may include a sensing system 120, a display apparatus 130, and a computing platform 150. The sensing system 120 may include several sensors that sense information about an environment around the mobile carrier 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, and a camera apparatus.

Some or all functions of the mobile carrier may be controlled by the computing platform 150. The computing platform 150 may include processors 151 to 15n (n is a positive integer). The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, and execute the instructions, to implement a corresponding function.

The mobile carrier may include an advanced driving assistant system (advanced driving assistant system, ADAS). The ADAS obtains information from around the mobile carrier by using a plurality of sensors (including but not limited to a lidar, a millimeter-wave radar, a camera apparatus, an ultrasonic sensor, a global positioning system, and an inertia measurement unit) on the mobile carrier, and analyzes and processes the obtained information, to implement functions such as obstacle perception, target identification, mobile carrier positioning, path planning, and driver monitoring/reminder. In this way, safety, automation, and comfort of mobile carrier driving are improved.

In this application, the mobile carrier in this application may include a road transportation means, a water transportation means, an air transportation means, industrial equipment, agricultural equipment, entertainment equipment, or the like. For example, the mobile carrier may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), agricultural equipment (for example, a lawn mower or a harvester), recreation equipment, or a toy vehicle. A type of the mobile carrier is not specifically limited in embodiments of this application.

FIG. 2 is a diagram of sensor distribution applied to a mobile carrier according to an embodiment of this application. It should be understood that FIG. 2 is merely an example diagram of a sensor distribution manner, and there may be another distribution manner. This is not limited in embodiments of this application. As shown in FIG. 2, sensors distributed on the mobile carrier include a millimeter-wave radar 201, a camera apparatus 202, and a lidar 203, and may further include another sensor that is not shown in FIG. 2. This is not limited in embodiments of this application. For example, a longest sensing distance of the lidar is about 150 meters, a longest sensing distance of the camera apparatus is about 200 meters, a longest sensing distance of a long-distance millimeter-wave radar is about 250 meters, and a longest sensing distance of a medium/short-range millimeter-wave radar is about 120 meters.

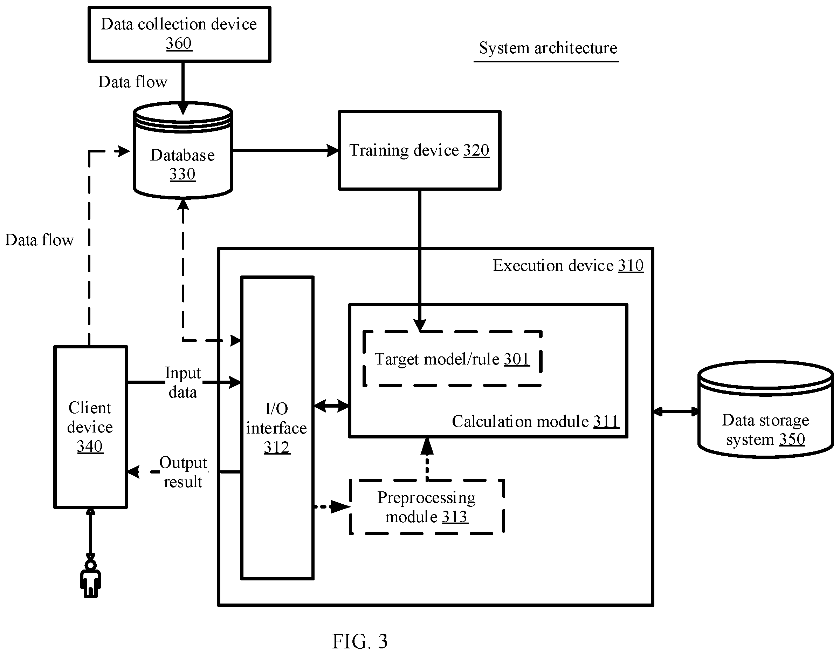

FIG. 3 is a diagram of a system architecture according to an embodiment of this application. In FIG. 3, a data collection device 360 is configured to collect training data. For example, for a general obstacle detection (general obstacle detection, GOD) model in embodiments of this application, the training data may include image data and/or point cloud data and an obstacle detection result. For example, the obstacle detection result may include obstacle semantic information, three-dimensional location information, and the like, where the obstacle detection result may be manually marked in advance.

After collecting the training data, the data collection device 360 stores the training data in a database 330, and a training device 320 performs training based on the training data maintained in the database 330 to obtain a target model/rule 301.

The following describes how the training device 320 obtains the target model/rule 301 based on the training data. The training device 320 processes the input data, and compares an output value with a target value until a difference between the output value of the training device 320 and the target value is less than a specific threshold. In this way, training of the target model/rule 301 is completed.

It should be noted that, in practice, the training data maintained in the database 330 is not necessarily collected by the data collection device 360, but may be an existing training set received from another device. In addition, it should be noted that the training device 320 does not necessarily train the target model/rule 301 completely based on the training data maintained in the database 330, or may obtain training data from a cloud or another place for model training. The foregoing descriptions should not be construed as a limitation on embodiments of this application.

For example, for the GOD model, before training data (which may also be referred to as a semantic point cloud training sample) is input into the training device 120, the semantic point cloud training sample may be divided into a plurality of unit data bodies having a preset size. The unit data bodies may include a voxel (voxel), a point pillar (point pillar), and the like. In this way, an irregular semantic point cloud training sample may be converted into a regular data body, so that a difficulty in subsequent data processing is reduced. A prediction result may include a prediction target of the semantic point cloud data, a three-dimensional location of the prediction target, and a probability that the prediction target exists at the three-dimensional location. That an iteration meets a preset requirement may include that a difference between the prediction result and three-dimensional location information of a labeled target is less than a difference threshold, where the difference threshold may be set to, for example, 0.01 or 0.05. That the iteration meets the preset requirement may further include that a quantity of iterations is greater than a preset quantity threshold, where the preset quantity threshold may be set to, for example, 50, 60, or the like. The target model/rule 201 may be a convolutional neural network (Convolutional Neural Network, CNN) and a plurality of CNN-based network modules, such as AlexNet, ResNet, ResNet1001 (pre-activation), Hourglass, Inception, Xception and SENet. This is not limited in this application.

The target model/rule 301 obtained by the training device 320 through training may be used in different systems or devices, for example, used in an execution device 310 in FIG. 3. The execution device 310 may be a terminal, for example, a mobile phone terminal, a tablet computer, a notebook computer, augmented reality (augmented reality, AR) AR/virtual reality (virtual reality, VR), or a mobile carrier; or may be a server or a cloud, or the like. For example, the execution device 310 may be the mobile carrier shown in FIG. 1, or a computing platform in the mobile carrier. In FIG. 3, an input/output (input/output, I/O) interface 312 is configured in the execution device 310, and is configured to exchange data with an external device. A user may input data to the I/O interface 312 through a client device 340. In embodiments of this application, the input data may include to-be-processed data input by the client device. For example, the input data is obtained through the sensing system 120 in the mobile carrier in FIG. 1, and is input to the computing platform of the mobile carrier shown in FIG. 1 through the I/O interface 312.

It should be understood that the training device 310 and the execution device 320 may be deployed in a same apparatus, or may be deployed in different apparatuses. The mobile carrier in FIG. 1 is used as an example. Both the training device 310 and the execution device 320 may be deployed on the computing platform of the mobile carrier. Alternatively, the training device 310 may be deployed on a cloud server, and the execution device 320 may be deployed on the computing platform of the mobile carrier. This is not limited in embodiments of this application.

Optionally, the execution device 310 may further include a preprocessing module 313. The preprocessing module 313 is configured to: preprocess the input data (for example, image data and/or point cloud data) received through the I/O interface 312, and if the input data does not need to be preprocessed, directly input the input data (for example, image data and/or point cloud data directly collected in this embodiment of this application) received through the I/O interface 312 to the execution device 310 for processing.

In a process in which the execution device 310 preprocesses the input data, or in a process in which a computing module 311 of the execution device 310 performs related processing such as computing, the execution device 310 may invoke data, code, and the like in a data storage system 350 for corresponding processing; and may also store, in the data storage system 350, data, instructions, and the like that are obtained through corresponding processing.

Finally, the I/O interface 312 returns an output result, for example, an output result of the foregoing obtained data, to the client device 340, to provide the output result to the user. Alternatively, the I/O interface 312 outputs the output result to a next algorithm module, to further process the output result, for example, in this embodiment of this application, an output result of the GOD model according to the instantiation method in embodiments of this application.

It should be noted that the training device 320 may generate corresponding target models/rules 301 for different targets or different tasks based on different training data. The corresponding target models/rules 301 may be used to achieve the foregoing targets or complete the foregoing tasks, to provide required results for the user.

In a case shown in FIG. 3, the user may manually provide input data and the user may manually provide the input data in an interface provided by the I/O interface 312. In another case, the client device 340 may automatically send the input data to the I/O interface 312. If authorization of the user is required for the client device 340 to automatically send the input data, the user may set corresponding permission in the client device 340. For example, the computing platform of the mobile carrier shown in FIG. 1 obtains the input data from the sensing system. The user may view, on the client device 340, a result output by the execution device 310. Specifically, the result may be presented in a form like display, sound, or action, for example, the result may be output through the display apparatus of the mobile carrier shown in FIG. 1. Alternatively, after the output result is further processed, a final processing result may be viewed. For example, in this embodiment of this application, a result obtained after instantiation of the output result may be displayed in the display apparatus of the mobile carrier. The client device 340 may alternatively be used as a data collection end, to collect, as new sample data, the input data input to the I/O interface 312 and the output result output from the I/O interface 312 that are shown in the figure, and store the new sample data in the database 330. Certainly, the client device 340 may alternatively not perform collection. Instead, the I/O interface 312 directly stores, in the database 130 as new sample data, the input data input to the I/O interface 312 and the output result output from the I/O interface 312 that are shown in the figure.

It should be noted that FIG. 3 is merely a diagram of a system architecture according to an embodiment of this application. A position relationship between the devices, the components, the modules, and the like shown in the figure does not constitute any limitation. For example, in FIG. 3, the data storage system 350 is an external memory relative to the execution device 310, but in another case, the data storage system 350 may alternatively be disposed in the execution device 310.

To better understand the solutions in embodiments of this application, the following briefly describes technical terms in this application.

### 1. Freespace (freespace)

The freespace may also be referred to as drivable space (drivable space). The freespace is an area around an intelligent driving vehicle in which driving, planning, and control can be performed.

### 2. Voxel (voxel)

The voxel is a basic unit of three-dimensional space.

Currently, a sensing algorithm is mainly based on allowlist-based bounding box (bounding box, Bbox) detection and Lidar point cloud clustering-based obstacle detection. The allowlist-based Bbox detection requires manual labeling of mined data for model training. A detection model is limited by efficiency and costs of manual labeling, and is difficult to generalize for a long-tail scenario and a corner case (corner case) in the intelligent driving field. The long-tail scenario and the corner case are possible scenarios with a low probability of occurrence in intelligent driving. The lidar point cloud clustering-based obstacle detection strongly depends on a point cloud collected by a lidar that has high costs. In addition, the lidar point cloud clustering-based obstacle detection depends on manual processing rules. As a result, the lidar point cloud clustering-based obstacle detection has poor robustness and generalization capability, and can be used in only specific expert scenarios.

However, in an actual driving process, a vehicle may encounter various obstacles, for example, an abnormally-shaped vehicle and an irregular obstacle. The foregoing obstacle detection model cannot well cope with different obstacles, and cannot obtain a general instantiation result of an object based on the foregoing detection method.

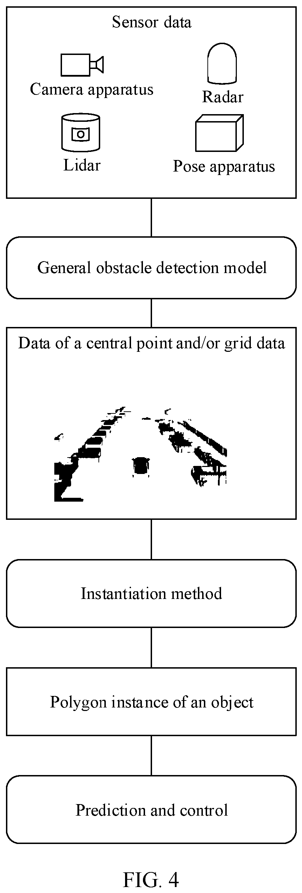

For the foregoing problem, embodiments of this application provide an object instantiation method and apparatus. The following provides descriptions in detail with reference to FIG. 4 to FIG. 15. It should be understood that in FIG. 4 and FIG. 6 to FIG. 11, a "right-angle block diagram" represents input data or output data, and a "circled-angle block diagram" represents a data processing step or a data processing model.

FIG. 4 is a diagram of an overall procedure of sensing and detection according to an embodiment of this application.

Step 1: Collect sensor data, where the sensor data may include information collected by different sensors.

For example, the information collected by the different sensors may include point cloud data information collected by a lidar (Lidar), distance information collected by a millimeter-wave radar and/or an ultrasonic radar, image information collected by a camera apparatus, pose information collected by an inertia measurement unit, and the like.

It should be understood that the information collected by the different sensors may also be referred to as multi-modal sensor information.

Step 2: Input the collected sensor data into a general obstacle detection (GOD) model to obtain data of a central point and grid data.

The data of the central point includes central points (god_center) of different obstacles, and the grid data includes a multidimensional attribute of each grid (grid). The multi-dimensional attribute of each grid may include occupancy information of the grid, semantics of the grid (for example, an object corresponding to the grid is a static object or a dynamic object. For another example, the grid is a visible surface or an invisible surface of an object), a height of an object corresponding to the grid, a speed of the object corresponding to the grid, an orientation of the object corresponding to the grid, and the like.

For example, when the object corresponding to the grid is a static object or a dynamic object, the semantics of the grid may further specifically include a type of the object corresponding to the grid. For example, the object corresponding to the grid is a road (road), a curb (curb), a bush (bush), others (others), or dynamics (dynamics).

It should be understood that the occupancy information of the grid indicates whether the grid is occupied by an object. For example, if the occupancy information of the grid is 1, it indicates that the grid is occupied by an object; or if the occupancy information of the grid is 0, it indicates that the grid is not occupied by an object. It should be understood that a specific value or symbol of the occupancy information is not limited in embodiments of this application, and this is merely used as an example for description herein.

It should be understood that the grid data may also be referred to as voxel (voxel) data, and the multi-dimensional attribute of each grid may also be referred to as a multi-dimensional attribute of each voxel. A name of the grid is not limited in embodiments of this application.

Step 3: Obtain a polygon (polygon) instance of an object in an instantiation method based on the data of the central point and/or the grid data.

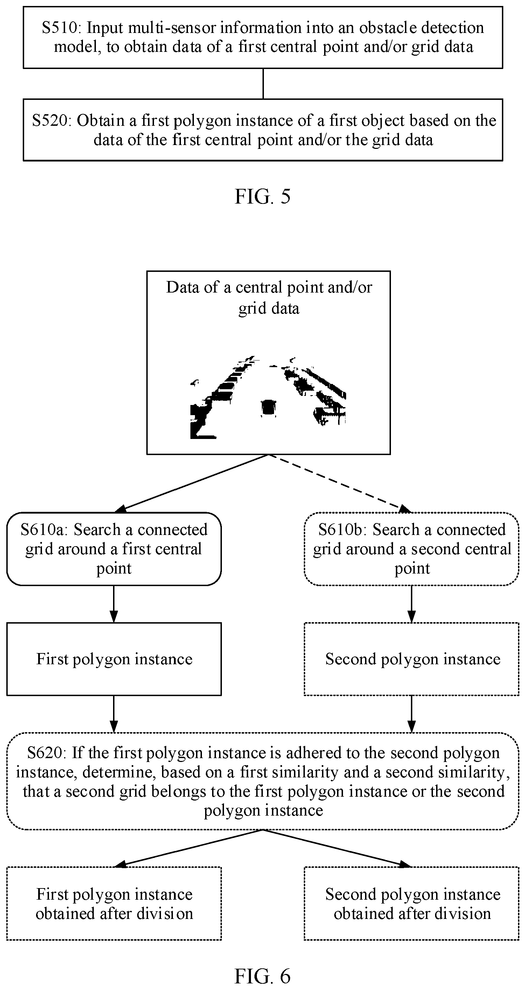

It should be understood that a specific instantiation method is described in detail with reference to FIG. 5 to FIG. 11.

Step 4: Perform subsequent prediction, planning, and control (prediction planning and control) based on the polygon instance of the object.

FIG. 5 is a schematic flowchart of object instantiation according to an embodiment of this application.

S510: Input multi-sensor information into an obstacle detection model, to obtain data of a first central point and/or grid data.

The data of the first central point includes central location information of a first object, and the grid data includes an attribute of each grid.

It should be understood that the multi-sensor information may include information collected by different sensors. For detailed descriptions, refer to related descriptions in step 1 in FIG. 4. Details are not described herein again.

It should be understood that the obstacle detection model may be a GOD model, and may be specifically obtained through training by using the system architecture shown in FIG. 3. For a training process of the GOD model, refer to related descriptions in FIG. 3. Details are not described herein again.

It should be further understood that, for specific content included in the attribute of each grid, refer to related descriptions in step 2 in FIG. 4. Details are not described herein again.

S520: Obtain a first polygon instance of the first object based on the data of the first central point and/or the grid data.

The first polygon instance of the first object may be understood as a contour shape or contour information of the first object. It should be understood that a quantity of first objects is not limited in embodiments of this application.

In a possible implementation, the first polygon instance of the first object is obtained based on the data of the first central point. The data of the first central point further includes size data of the first central point.

It should be understood that, when the data of the first central point further includes the size data of the first central point in addition to the central location information of the first object, the first polygon instance of the first object may be directly obtained based on the first central point.

In a possible implementation, a first grid around a grid in which the first central point is located is determined as the first polygon instance. Occupancy information in grid data of the first grid indicates that the first grid is occupied.

In a possible implementation, when the first polygon instance is adhered to a second polygon instance of a second object, that a second grid belongs to the first object or the second object is determined based on a first similarity and a second similarity.

The second grid is at a location at which the first polygon instance is adhered to the second polygon instance, the first similarity includes a similarity between the second grid and the grid in which the first central point is located, the second similarity includes a similarity between the second grid and a grid in which a second central point is located, and data of the second central point includes central location information of the second object.

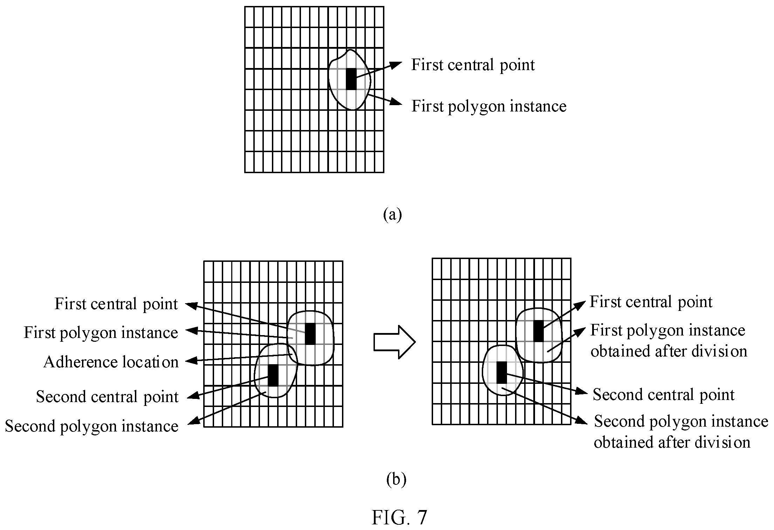

It should be understood that a specific manner of obtaining the first polygon instance of the first object based on the data of the first central point and the grid data is described in detail with reference to FIG. 6 and FIG. 7.

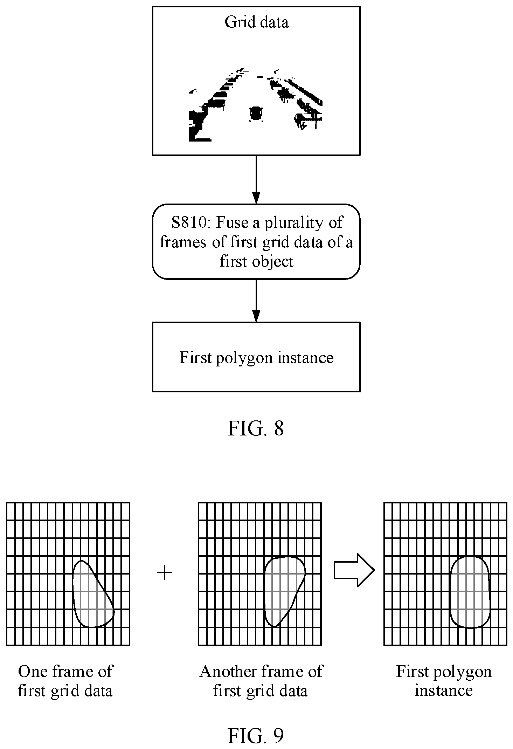

In a possible implementation, the grid data includes a plurality of frames of data of the first object; and the plurality of frames of data is fused to obtain the first polygon instance. It should be understood that a specific manner is described in detail with reference to FIG. 8 to FIG. 10.

It should be understood that the plurality of frames of data may also be referred to as a plurality of frames of first grid data, where the plurality of frames of first grid data are grid data corresponding to the first object in different frames obtained based on an obstacle detection model.

In a possible implementation, the grid data includes a plurality of frames of data; and the plurality of frames of data is fused to obtain a plurality of first polygon instances of the first object.

It should be understood that the plurality of frames of data may also be referred to as a plurality of frames of second grid data, where the plurality of frames of second grid data are grid data of different frames obtained based on an obstacle detection model.

In some implementations, the plurality of first polygon instances are clustered based on different height information in the plurality of frames of data, to obtain different three-dimensional polygon instances. Visible surfaces of the different three-dimensional polygon instances are divided to obtain boundaries of the plurality of first objects.

In some implementations, the plurality of first polygon instances are clustered based on different height information in the plurality of frames of data, to obtain different three-dimensional polygon instances. The plurality of frames of data are input into a ground estimation model, to obtain height information of the plurality of first objects from a road surface. Passing area analysis is performed on the different three-dimensional polygon instances based on the height information, to obtain passing risk information corresponding to the plurality of first objects.

In some implementations, when the plurality of first objects are spatially continuous, and the plurality of first polygon instances belong to a same line segment, the plurality of first polygon instances are converted into a traveling boundary line.

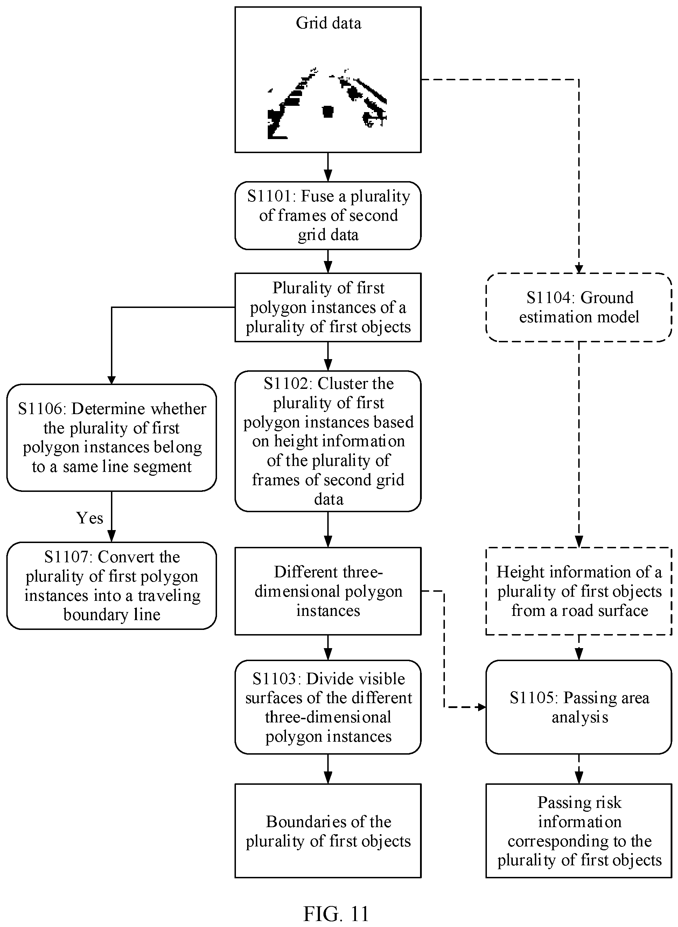

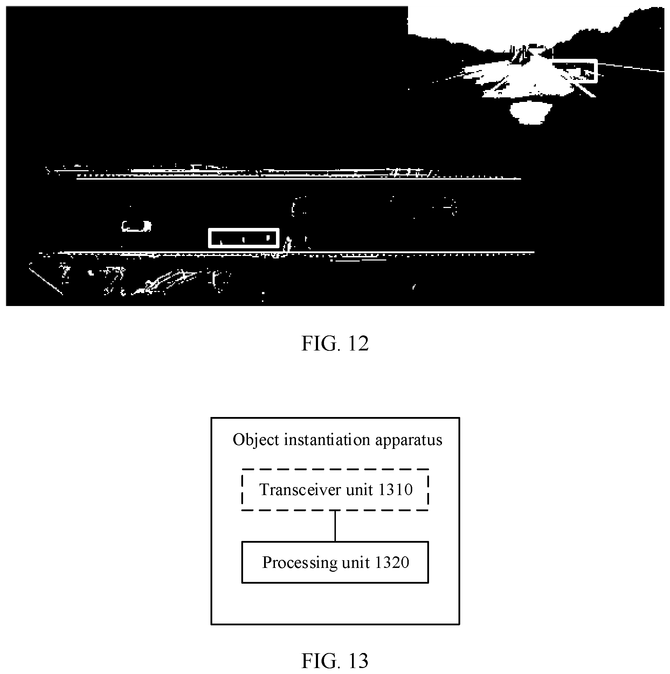

It should be understood that a specific manner of obtaining the first polygon instance of the first object based on the grid data is described in detail with reference to FIG. 11 and FIG. 12.

In the foregoing technical solutions, the contour information of the first object is obtained by using the data of the first central point and/or the grid data that are/is output by the obstacle detection model. This is a general instantiation method applicable to different types of objects or obstacles, and further avoids iterative calculation of a general clustering algorithm. In this way, a calculation amount is small, a requirement on computing power of a device is small, and calculation efficiency is high, so that the device can be conveniently deployed on a vehicle.

The following describes in detail specific procedures of the foregoing different instantiation manners with reference to FIG. 6 to FIG. 11.

FIG. 6 is another schematic flowchart of object instantiation according to an embodiment of this application.

S610a: Search, based on the first central point, a connected grid around the grid in which the first central point is located, to obtain the first polygon instance.

Specifically, a first grid around the grid in which the first central point is located is determined as the first polygon instance, where occupancy information corresponding to the first grid indicates that the first grid is occupied.

For example, it is determined whether the occupancy information of the first grid around the grid in which the first central point is located is that the first grid is occupied by an object. If the occupancy information of the first grid indicates that the first grid is occupied by the object, the first grid is determined as the first polygon instance.

It should be understood that a quantity of first grids is not limited in embodiments of this application.

Optionally, S610b: Search, based on the second central point, a connected grid around a grid in which the second central point is located, to obtain the second polygon instance.

It should be understood that for a specific step, refer to the manner of obtaining the first polygon instance in S610a. Details are not described herein again.

In this way, the data of the central point of the object is directly output by using the GOD model without obtaining the central point through clustering iteration, thereby improving calculation efficiency of object instantiation.

S620: When the first polygon instance is adhered to the second polygon instance, determine, based on the first similarity and the second similarity, that the second grid belongs to the first polygon instance or the second polygon instance.

The second grid is at a location at which the first polygon instance is adhered to the second polygon instance. In other words, the second grid belongs to both the first polygon instance and the second polygon instance before division. It should be understood that a quantity of second grids is not limited in embodiments of this application.

The first similarity includes a similarity between the second grid and the grid in which the first central point is located, the second similarity includes a similarity between the second grid and the grid in which the second central point is located, and the data of the second central point includes the central location information of the second object.

It should be understood that the similarity between the second grid and the grid in which the first central point is located may be obtained by using an attribute of the second grid and an attribute of the grid in which the first central point is located, and the similarity between the second grid and the grid in which the first central point is located may be obtained by using the attribute of the second grid and an attribute of the grid in which the second central point is located.

Specifically, when the first similarity is greater than the second similarity, it is determined that the second grid belongs to the first polygon instance; or when the first similarity is less than the second similarity, it is determined that the second grid belongs to the second polygon instance. A specific similarity calculation manner is not limited in embodiments of this application. For example, the first similarity may be different attributes corresponding to the second grid and the grid in which the first central point is located.

In this way, if the first polygon instance is adhered to the second polygon instance, a problem that the first object is adhered to the second object may be resolved by using a multi-dimensional similarity. Especially for a dynamic object, clearly separating boundaries of the dynamic first object and the dynamic second object can help accurate planning and control subsequently.

FIG. 7 is a two-dimensional diagram of an effect of object instantiation according to an embodiment of this application. It should be understood that the mesh shown in FIG. 7 is not a minimum scale of the grid, and the grid in which the central point is located is merely an example, and does not constitute any limitation.

As shown in (a) in FIG. 7, the connected grid around the grid in which the first central point is located that is output by the GOD model is searched, to obtain the first polygon instance.

As shown in (b) in FIG. 7, the first polygon instance is adhered to the second polygon instance. As shown in the figure, there is a location at which the two instances are adhered. The first polygon instance and the second polygon instance that are separated are obtained by using the first similarity and the second similarity.

The foregoing solution is for an object having a central point. However, an output of the GOD model may miss some objects. FIG. 8 is a schematic flowchart of another object instantiation method according to an embodiment of this application.

S810: Fuse a plurality of frames of first grid data of the first object, to obtain the first polygon instance.

The plurality of frames of first grid data are grid data corresponding to the first object in different frames obtained based on the obstacle detection model.

It should be understood that the first object is an object corresponding to grid data of a third grid in the grid data output by the GOD. The grid data of the third grid is grid data other than the polygon instance obtained based on the central point, and occupancy information in the grid data of the third grid indicates that the third grid is occupied by an object.

In this embodiment of this application, by using grid data of different frames for the first object in time domain, both visible and invisible surfaces of the instance of the object can be completely depicted, thereby helping to perform more proper prediction, planning, and control on the first object. For example, for a dynamic object, as a vehicle moves continuously, the plurality of frames of first grid data may supplement grid data of different angles of the dynamic object, to obtain a more complete first polygon instance. For another example, for a static object (for example, a traffic cone), if the vehicle moves continuously while a dynamic object may block between the vehicle and the static object, the plurality of frames of first grid data may further supplement grid data of different angles of the static object, to obtain a more complete first polygon instance.

FIG. 9 is another two-dimensional diagram of an effect of object instantiation according to an embodiment of this application. It should be understood that the mesh shown in FIG. 9 is not a minimum scale of the grid, and two frames of grid data are used as an example in FIG. 9.

As shown in FIG. 9, both first grid data in one frame and first grid data in another frame are incomplete. A supplemented first polygon instance may be obtained by combining the first grid data in the two frames. By using more frames of first grid data, the first polygon instance can be more complete. A quantity of frames for multi-frame fusion is not limited in embodiments of this application.

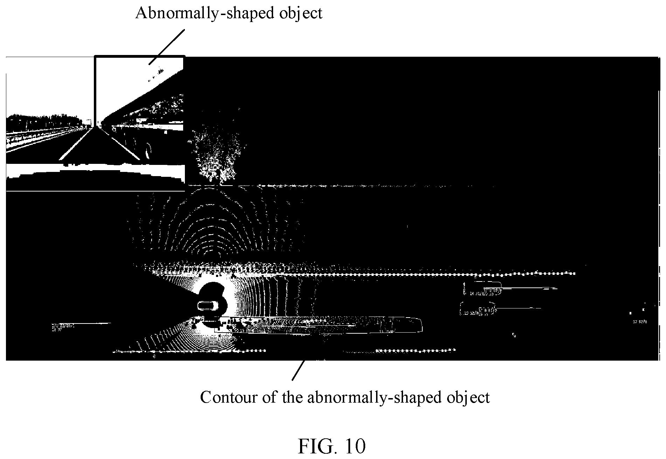

FIG. 10 is a diagram of an effect of applying an object instantiation method according to an embodiment of this application.

An upper left corner of FIG. 10 shows an abnormally-shaped object, and more specifically, a mobile vehicle carrying the abnormally-shaped object. In the foregoing instantiation method, a complete contour of the abnormally-shaped object may be obtained, as shown in FIG. 10. In allowlist-based obstacle detection, there may be problems of unstable detection and incomplete detected contour. In the instantiation method in this embodiment of this application, a contour of an actual abnormally-shaped object can be completely and precisely obtained.

FIG. 11 is a schematic flowchart of still another object instantiation method according to an embodiment of this application.

S1101: Fuse a plurality of frames of second grid data, to obtain a plurality of first polygon instances of a plurality of first objects.

The plurality of frames of second grid data are grid data of different frames obtained based on the obstacle detection model.

It should be understood that the second grid data may include a plurality of first objects.

Specifically, historical grid data and grid data of a current frame in a time sequence are fused to obtain the plurality of first polygon instances of the first object.

In this way, in a time sequence, by using grid data output through a multi-frame GOD model, noise can be filtered out, and problems such as blocking and a low confidence level (for example, a case in which a distant point cloud is sparse or a visual feature is not obvious) of distant prediction can be effectively overcome.

S1102: Cluster the plurality of first polygon instances based on height information in the plurality of frames of second grid data, to obtain different three-dimensional polygon instances.

It should be understood that three-dimensional polygon instances of different height levels may be obtained by clustering the plurality of first polygon instances by using different height information.

In this way, the first polygon instances of the plurality of height levels are clustered, so that an objective and realistic environment can be further reproduced, thereby helping further resolve a scenario in which a vehicle is uphill or downhill and a scenario of a suspended obstacle.

S1103: Divide visible surfaces of the different three-dimensional polygon instances, to obtain boundaries of the plurality of first objects.

Specifically, based on an attribute of a visible surface in semantic information in grid data of a fourth grid, the visible surfaces of the different three-dimensional polygon instances are divided, to obtain the boundaries of the plurality of first objects. The fourth grid includes grids that are in the plurality of frames of second grid data and that are related to the different three-dimensional polygon instances.

In this way, the three-dimensional polygon instance is divided based on visible surface information in the grid data, so that a boundary of an obstacle can be represented more briefly, thereby further helping improve accuracy of subsequent vehicle planning and control.

Optionally, S1104: Input the plurality of frames of second grid data into a ground estimation model, to obtain height information of the plurality of first objects from a road surface.

It should be understood that the ground estimation model is trained in advance.

Optionally, S1105: Passing area analysis is performed on the different three-dimensional polygon instances obtained in S1102 based on the height information of the plurality of first objects from the road surface, to obtain passing risk information corresponding to the plurality of first objects.

It should be understood that, when the passing risk information indicates a low risk, it means that a communication obstacle of the plurality of first objects to the vehicle is small; or when the passing risk information indicates a high risk, it means that a communication obstacle of the plurality of first objects to the vehicle is large.

For example, when the first object is a green plant by a roadside that intrudes a driving road of the vehicle, if a height of the green plant from a road surface does not affect passing of the vehicle under the green plant, passing risk information corresponding to the green plant indicates a low passing risk.

For another example, when the first object is a suspended wall at an entrance of an underground parking lot, passing area analysis is performed, based on height information of the suspended wall from a road surface, on a three-dimensional polygon instance corresponding to the suspended wall, to obtain passing risk information corresponding to the suspended wall that indicates a low passing risk.

For another example, when the first object is a height limiting pole, passing risk information corresponding to the height-limiting pole that indicates a low passing risk is obtained based on height information of the height limiting pole from a road surface and the height information of the vehicle if a three-dimensional polygon instance corresponding to the height-limiting pole is higher than the height information of the vehicle.

In this way, for an object that has a low risk for a vehicle to pass, for example, a suspended obstacle and a height limiting pole in a driving process, a probability of incorrectly triggering AEB can be reduced by evaluating the passing risk information of the first object, thereby improving user experience.

Optionally, after S1101, if the plurality of first objects are spatially continuous, S1106 is performed to determine whether the plurality of first polygon instances belong to a same line segment.

In a possible implementation, whether the plurality of first polygon instances belong to a same line segment is determined based on whether a spacing between two adjacent first polygon instances in the plurality of first polygon instances is less than a preset distance.

For example, FIG. 12 is another diagram of an effect of applying an object instantiation method according to an embodiment of this application. As shown in FIG. 12, the first object is an isolation rail on a road edge isolation belt, a plurality of isolation rails are spatially continuous, a spacing distance between every two adjacent isolation rails is less than a preset distance, and the plurality of isolation rails belong to a same line segment.

For another example, the first object is an isolation rail on a road edge isolation belt, and a plurality of spacing rails are spatially continuous. However, there are two adjacent isolation rails with a spacing greater than the preset distance, and the two adjacent isolation rails do not belong to a same line segment.

It should be understood that, in this embodiment of this application, whether the plurality of first polygon instances belong to a same line segment is not limited when the spacing between two adjacent first polygon instances is equal to the preset distance.

Optionally, S1107: When the plurality of first polygon instances belong to a same line segment, convert the plurality of first polygon instances into a traveling boundary line.

Specifically, passing attributes corresponding to the plurality of first polygon instances are obtained based on a travelling location and a travelling boundary of the vehicle.

For example, if the driving location of the vehicle is on a left side of the driving boundary, the left side of the driving boundary is a passable area, and a right side of the driving boundary is a non-passable area. It should be understood that this is merely a simple example for description, and the distance does not constitute a limitation.

In this way, continuity of continuous first polygon instances is determined, to convert the plurality of first polygon instances belonging to the same line segment into the traveling boundary line. In a complex traffic environment, a drivable boundary of the vehicle can be well determined, and this has a great effect in a scenario in which a traffic reality changes or there is no high-definition map.

The foregoing describes in detail object instantiation methods provided in embodiments of this application with reference to FIG. 4 to FIG. 12. It may be understood that, to implement the foregoing functions, a corresponding hardware structure and/or a corresponding software module for performing each function are/is included.

A person skilled in the art should be able to be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for the particular application, but it should not be considered that the implementation goes beyond the scope of this application.

The following specifically describes an object instantiation apparatus provided in embodiments of this application with reference to FIG. 13 to FIG. 15. It should be understood that descriptions of apparatus embodiments correspond to the descriptions of the method embodiments. Therefore, for content that is not described in detail, refer to the foregoing method embodiments. For brevity, a part of content is not described again.

FIG. 13 is a diagram of an object instantiation apparatus according to an embodiment of this application. The apparatus may include a processing unit 1320, and the processing unit 1320 is configured to perform data processing. Optionally, the apparatus 1300 may further include a transceiver unit 1310. The transceiver unit 1310 may implement a corresponding communication function. The transceiver unit 1310 may also be referred to as a communication interface, a communication unit, or an interface unit. It should be understood that, operations such as sending and receiving in this application, unless otherwise specified, or if the operations do not conflict with actual functions or internal logic of the operations in related descriptions, may be more generally understood as operations such as output and input, instead of sending and receiving operations directly performed by a radio frequency circuit and an antenna.

Optionally, the apparatus may further include a storage unit. The storage unit may be configured to store instructions and/or data. The processing unit 1320 may read the instructions and/or the data in the storage unit, so that the apparatus implements the foregoing method embodiments.

The apparatus may be configured to perform the actions in the foregoing method embodiments. The transceiver unit 1310 is configured to perform related operations of obtaining in the foregoing method embodiments. The processing unit 1320 is configured to perform related operations of processing in the foregoing method embodiments.

In a design, the apparatus is configured to perform the actions in the method embodiment shown in FIG. 4, FIG. 5, FIG. 6, FIG. 8, or FIG. 11. An execution body may be a chip, a chip system, or a processor that supports the object instantiation apparatus in implementing a corresponding method, or may be a logic module or software that can implement all or some functions of the object instantiation apparatus.

Specifically, the processing unit 1320 is configured to: input multi-sensor information into an obstacle detection model, to obtain data of a first central point and/or grid data, where the data of the first central point includes central location information of a first object, and the grid data includes an attribute of each grid; and obtain a first polygon instance of the first object based on the data of the first central point and/or the grid data.

For parts that are not described in detail, refer to the foregoing method embodiments.

It should be understood that a specific process in which the units perform the foregoing corresponding steps is described in detail in the foregoing method embodiments, and for brevity, details are not described herein.

The processing unit 1320 in the foregoing embodiment may be implemented by at least one processor or a processor-related circuit. The transceiver unit 1310 may be implemented by a transceiver or a transceiver-related circuit. The storage unit may be implemented by at least one memory.

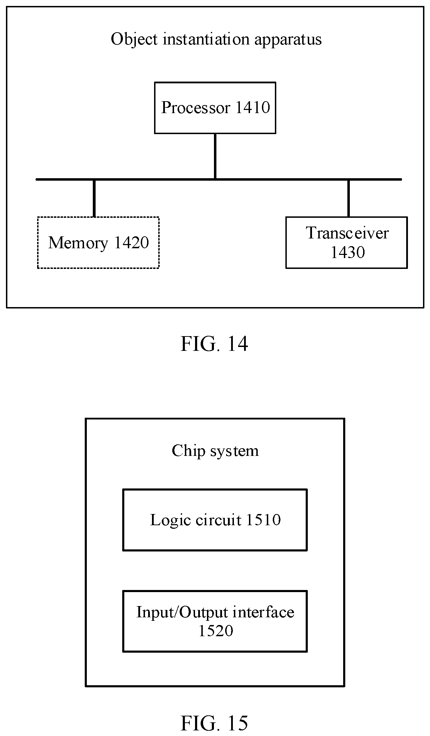

FIG. 14 is a block diagram of an object instantiation apparatus according to an embodiment of this application.

As shown in FIG. 14, embodiments of this application further provide an object instantiation apparatus. The apparatus includes a processor 1410. Optionally, the apparatus further includes a memory 1420. The processor 1410 is coupled to the memory 1420. The memory 1420 is configured to store a computer program or instructions and/or data. The processor 1410 is configured to execute the computer program or the instructions and/or the data stored in the memory 1420, so that the methods in the foregoing method embodiments are performed.

Optionally, the apparatus includes one or more processors 1410.

Optionally, as shown in FIG. 14, the apparatus 1400 may further include a memory 1420.

Optionally, the apparatus may include one or more memories 1420.

Optionally, the memory 1420 and the processor 1410 may be integrated together, or separately disposed.

Optionally, as shown in FIG. 14, the apparatus may further include a transceiver 1430. The transceiver 1430 is configured to receive and/or send a signal. For example, the processor 1410 is configured to control the transceiver 1430 to receive and/or send a signal.

In a solution, the apparatus is configured to implement the operations performed by the object instantiation apparatus in the foregoing method embodiments.

For example, the processor 1410 is configured to implement processing-related operations performed by the object instantiation apparatus in the foregoing method embodiments, and the transceiver 1430 is configured to implement receiving and sending-related operations performed by the object instantiation apparatus in the foregoing method embodiments.

FIG. 15 is a diagram of a chip system according to an embodiment of this application. The chip system (or may be referred to as a processing system) includes a logic circuit 1510 and an input/output interface (input/output interface) 1520. The logic circuit is configured to be coupled to the input interface, and transmit a data parameter through the input/output interface, to perform the method in the foregoing method embodiments. A device on which the chip system is installed may implement the method and functions in embodiments of this application. For example, the logic circuit 1510 may be a processing circuit in the chip system, to control the device on which the chip system is installed, and may be coupled to a storage unit, and invoke instructions in the storage unit, so that the device can implement the method and functions in embodiments of this application. The input/output interface 1520 may be an input/output circuit in the chip system, to output information processed by the chip system, or input to-be-processed data or signaling information to the chip system for processing.

In a solution, the chip system is configured to implement the operations performed by the object instantiation apparatus in the foregoing method embodiments.

For example, the logic circuit 1510 is configured to implement a processing-related operation in the foregoing method embodiments, and the input/output interface 1520 is configured to implement an obtaining-related operation in the foregoing method embodiments.

An embodiment of this application further provides a computer-readable storage medium, where the computer-readable storage medium stores computer instructions used to implement the method performed by the object instantiation apparatus in the foregoing method embodiments.

For example, when the computer program is executed by a computer, the computer can implement the method executed by the object instantiation apparatus in the foregoing method embodiments.

An embodiment of this application further provides a computer program product including instructions. The instructions are executed by a computer, so that the computer implements the method performed by the object instantiation apparatus in the foregoing method embodiments.

An embodiment of this application further provides a mobile carrier. The mobile carrier may include the object instantiation apparatus.

Optionally, the mobile carrier may be a vehicle.

An embodiment of this application further provides a cloud server. The cloud server may include the object instantiation apparatus.

For explanations and beneficial effect of related content of any one of the apparatuses provided above, refer to the corresponding method embodiments provided above. Details are not described herein again.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that, the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

A person of ordinary skill in the art should be aware that, in combination with units and algorithm steps of the examples described embodiments disclosed in this specification, this application may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An object instantiation method, comprising
inputting multi-sensor information into an obstacle detection model, to obtain data of a first central point and/or grid data, wherein the data of the first central point comprises central location information of a first object, and the grid data comprises an attribute of each grid; and
obtaining a first polygon instance of the first object based on the data of the first central point and/or the grid data.

2. The method according to claim 1, wherein the obtaining a first polygon instance of the first object based on the data of the first central point and/or the grid data comprises:
determining a first grid around a grid in which the first central point is located as the first polygon instance, wherein occupancy information corresponding to the first grid indicates that the first grid is occupied.

3. The method according to claim 2, wherein the method further comprises:
when the first polygon instance is adhered to a second polygon instance of a second object, determining, based on a first similarity and a second similarity, that a second grid belongs to the first object or the second object, wherein
the second grid is at a location at which the first polygon instance is adhered to the second polygon instance, the first similarity comprises a similarity between the second grid and the grid in which the first central point is located, the second similarity comprises a similarity between the second grid and a grid in which a second central point is located, and data of the second central point comprises central location information of the second object.

4. The method according to any one of claims 1 to 3, wherein the grid data comprises a plurality of frames of data of the first object; and
the obtaining a first polygon instance of the first object based on the data of the first central point and/or the grid data comprises:
fusing the plurality of frames of data to obtain the first polygon instance.

5. The method according to claim 1, wherein the grid data comprises a plurality of frames of data; and
the obtaining a first polygon instance of the first object based on the data of the first central point and/or the grid data comprises:
fusing the plurality of frames of data to obtain a plurality of first polygon instances of the first object.

6. The method according to claim 5, wherein the method further comprises:
clustering the plurality of first polygon instances based on height information in the plurality of frames of data, to obtain different three-dimensional polygon instances.

7. The method according to claim 6, wherein the method further comprises:
dividing visible surfaces of the different three-dimensional polygon instances to obtain boundaries of a plurality of first objects.

8. The method according to claim 6, wherein the method further comprises:
inputting the plurality of frames of data into a ground estimation model, to obtain height information of the plurality of first objects from a road surface; and
performing passing area analysis on the different three-dimensional polygon instances based on the height information, to obtain passing risk information corresponding to the plurality of first objects.

9. The method according to claim 5, wherein when the plurality of first objects are spatially continuous, the method further comprises:
when the plurality of first polygon instances belong to a same line segment, converting the plurality of first polygon instances into a traveling boundary line.

10. An object instantiation apparatus, wherein the apparatus comprises a processing unit, and
the processing unit is configured to: input multi-sensor information into an obstacle detection model, to obtain data of a first central point and/or grid data, wherein the data of the first central point comprises central location information of a first object, and the grid data comprises an attribute of each grid; and
obtain a first polygon instance of the first object based on the data of the first central point and/or the grid data.

11. The apparatus according to claim 10, wherein the processing unit is specifically configured to:
determine a first grid around a grid in which the first central point is located as the first polygon instance, wherein occupancy information corresponding to the first grid indicates that the first grid is occupied.

12. The apparatus according to claim 11, wherein the processing unit is further configured to:
when the first polygon instance is adhered to a second polygon instance of a second object, determine, based on a first similarity and a second similarity, that a second grid belongs to the first object or the second object, wherein
the second grid is at a location at which the first polygon instance is adhered to the second polygon instance, the first similarity comprises a similarity between the second grid and the grid in which the first central point is located, the second similarity comprises a similarity between the second grid and a grid in which a second central point is located, and data of the second central point comprises central location information of the second object.

13. The apparatus according to any one of claims 10 to 12, wherein the grid data comprises a plurality of frames of data of the first object; and
the processing unit is specifically configured to fuse the plurality of frames of data to obtain the first polygon instance.

14. The apparatus according to claim 10, wherein the grid data comprises a plurality of frames of data; and
the processing unit is specifically configured to fuse the plurality of frames of data to obtain a plurality of first polygon instances of the first object.

15. The apparatus according to claim 14, wherein the processing unit is further configured to cluster the plurality of first polygon instances based on height information in the plurality of frames of data, to obtain different three-dimensional polygon instances.

16. The apparatus according to claim 15, wherein the processing unit is further configured to divide visible surfaces of the different three-dimensional polygon instances to obtain boundaries of a plurality of first objects.

17. The apparatus according to claim 15, wherein the processing unit is further configured to:
input the plurality of frames of data into a ground estimation model, to obtain height information of the plurality of first objects from a road surface; and
perform passing area analysis on the different three-dimensional polygon instances based on the height information, to obtain passing risk information corresponding to the plurality of first objects.

18. The apparatus according to claim 14, wherein when the plurality of first objects are spatially continuous, the processing unit is further configured to:
when the plurality of first polygon instances belong to a same line segment, convert the plurality of first polygon instances into a traveling boundary line.

19. An object instantiation apparatus, comprising a processor, wherein the processor is coupled to a memory, the memory is configured to store computer program code or instructions, and the processor is configured to execute the computer program code or the instructions in the memory, for the apparatus to perform the method according to any one of claims 1 to 9.

20. A mobile carrier, wherein the mobile carrier comprises the apparatus according to any one of claims 10 to 19.

21. A computer-readable storage medium, wherein the computer-readable storage medium stores computer program code or instructions, and when the computer program code or the instructions are run on a computer, the computer is enabled to perform the method according to any one of claims 1 to 9.

22. A computer program product, wherein when the computer program product runs on a computer, the computer is enabled to perform the method according to any one of claims 1 to 9.

23. A chip, wherein the chip is coupled to a memory, and is configured to: read and execute program instructions stored in the memory, to implement the method according to any one of claims 1 to 9.
